Europäisches Patentamt

European Patent Office

Office européen des brevets

(19)

(11) Numéro de publication : **0 434 544 B1**

(12) **FASCICULE DE BREVET EUROPEEN**

(45) Date de publication du fascicule du brevet :
22.09.93 Bulletin 93/38

(21) Numéro de dépôt : **90403642.3**

(22) Date de dépôt : **18.12.90**

(51) Int. Cl.⁵ : **E21B 33/138**

(54) Procédé et composition pour la réduction sélective de la perméabilité à l'eau dans les réservoirs d'hydrocarbures chauds et sales.

(30) Priorité : **21.12.89 FR 8917161**

(43) Date de publication de la demande :
**26.06.91 Bulletin 91/26**

(45) Mention de la délivrance du brevet :
**22.09.93 Bulletin 93/38**

(84) Etats contractants désignés :
**DE FR GB NL**

(56) Documents cités :
**US-A- 4 133 383**
**US-A- 4 718 491**

(73) Titulaire : **INSTITUT FRANCAIS DU PETROLE**
**4, Avenue de Bois Préau**
**F-92502 Rueil-Malmaison (FR)**

(72) Inventeur : **Kohler, Norbert**
**10, Place du Verdi**
**F-78760 Villennes Sur Seine (FR)**
Inventeur : **Zaitoun, Alain**
**20, Place Martin Luther King**
**F-76000 Rouen (FR)**

(74) Mandataire : **Andreeff, François**
**INSTITUT FRANCAIS DU PETROLE 4, avenue**
**de Bois-Préau**
**F-92502 Rueil-Malmaison (FR)**

EP 0 434 544 B1

## Description

La présente invention est relative à un procédé et à une composition permettant de diminuer sélectivement la perméabilité à l'eau des réservoirs d'hydrocarbures chauds et salés. Il réduit sélectivement la circulation de l'eau dans les formations souterraines sans pour autant diminuer le passage de l'huile ou du gaz. Il présente un intérêt particulièrement grand lorsque l'eau est chaude et/ou salée, par exemple à une température de formation de 70 à 130°C et/ou une salinité de l'eau au moins égale à celle de l'eau de mer. Il est particulièrement applicable à la récupération assistée des hydrocarbures.

Cette récupération des hydrocarbures liquides et gazeux de formations souterraines s'accompagne très fréquemment par la production de grandes quantités d'eau. Dans certains cas, bien que des productions significatives d'hydrocarbures soient obtenues, la production d'eau est si importante et les coûts de traitement de l'eau si élevés que la production d'hydrocarbures n'est pas économique. Spécifiquement cette arrivée massive d'eau augmente les coûts de production par gas-lift par exemple ainsi que les coûts de séparation des fluides de traitement de l'eau et de son évacuation. Elle empêche également l'écoulement de l'hydrocarbure vers le puits et aggrave les problèmes de formation de dépôts et de corrosion. Dans les réservoirs hétérogènes, la production excessive d'eau est souvent occasionnée par la digitation de l'eau injectée par les zones de forte perméabilité. Cela conduit à une percée prématurée de l'eau au puits de production, à un mauvais balayage volumétrique et finalement à une récupération inefficace des hydrocarbures.

De nombreuses méthodes destinées à réduire la perméabilité à l'eau des formations très perméables ont été proposées et testées sur champ; elles consistent en général à introduire dans la formation, au niveau de la zone à isoler, soit un ciment soit une suspension de particules solides ou de paraffines. Des résines ou des gels de polymères hydrosolubles ont plus récemment été proposés et mis en oeuvre. Tous ces procédés présentent le désavantage de ne pas être sélectifs et de bloquer presque autant la circulation de l'huile ou du gaz que celle de l'eau.

Plus récemment on a proposé l'emploi de polymères hydrosolubles de poids moléculaire élevé en l'absence de tout agent de réticulation ou de pontage, qui présentent l'avantage par rapport aux solutions précédentes et en particulier, celles qui utilisent des résines ou des gels de polymères, de réduire la circulation de l'eau sans affecter de manière gênante la production d'huile ou de gaz.

Deux familles de polymères hydrosolubles de poids moléculaire élevé ont été tout particulièrement utilisées: les polyacrylamides hydrolysés ou non et certains polysaccharides, en particulier les polysaccharides non ioniques.

Le brevet des Etats-Unis d'Amérique No. 4,095,651 recommande ainsi l'emploi des polyacrylamides hydrolysés de haut poids moléculaire dispersés dans une eau de salinité plus élevée que l'eau de formation pour combattre de manière sélective les venues d'eau des puits producteurs. Ce procédé est toutefois d'un emploi limité parce qu'il est surtout efficace pour réduire les venues d'eau de faible salinité ($\leqq$ 5 g/l de sels totaux dissous) et que du fait de l'hydrolyse du polyacrylamide en polyacrylate son efficacité est réduite dès que la température de la formation dépasse 60-70°C.

Le brevet des Etats-Unis d'Amérique No. 4,842,071 recommande l'injection simultanée ou consécutive d'un polymère ou copolymère non ionique de l'acrylamide et d'un agent basique pour réduire sélectivement les venues d'eau dans les puits producteurs. Ce procédé bien qu'efficace pour réduire les venues d'eau de salinité élevée présente les mêmes inconvénients que ceux à base de polyacrylamides hydrolysés dès que la température de fond est élevée.

Le brevet des Etats-Unis d'Amérique No. 4,155,405 recommande l'injection dans les puits déjà forés ou en cours de forage d'un gel aqueux de polyacrylamide non hydrolysé et d'un dialdéhyde pour prévenir les venues d'eau. En dehors du fait que la stabilité du polymère de base est réduite dès que la température du réservoir s'élève il s'agit en plus de la formation d'un gel in situ qui n'est pas sélectif et qui bloque donc à la fois l'eau et l'huile ou le gaz.

Le brevet US 4 133 383 décrit un procédé pour le blocage définitif de l'écoulement des fluides d'une formation au niveau d'un puits à production non contrôlée selon lequel on injecte par un puits secondaire un fluide non visqueux, en milieu acide et à basse température, comprenant un polysaccharide réticulé par un dialdéhyde et qui sous l'influence de la température se transforme en un fluide hautement visqueux dans ladite formation et au voisinage du puits non contrôlé. L'inconvénient majeur de ce type de procédé est qu'il arrête définitivement toute production de fluides au niveau du puits de production.

Le brevet des Etats-Unis d'Amérique No. 4,718,491 de la demanderesse préconise l'utilisation de différents polysaccharides et en particulier d'un scléroglucane et en l'absence de tout additif stabilisant pour la réduction sélective de la perméabilité à l'eau au voisinage d'un puits de production d'huile ou de gaz. Le domaine d'application préférentiel de ce procédé couvre les productions d'eau chaude (jusqu'à 130°C) et salées (salinité supérieure à 30 g/l).

2

Il s'avère cependant que le polymère ne conserve pas sa stabilité en milieu poreux très longtemps surtout à haute température. C'est ainsi que vers 75°C, en présence d'eau salée, on a constaté une stabilité satisfaisante du polymère pendant une période d'un an environ tandis que vers 120°C, on ne peut généralement pas espérer stabiliser le polymère plus d'une semaine en l'absence d'additif.

L'objet de l'invention remédie aux inconvénients cités et concerne donc un procédé de traitement où la stabilité du polysaccharide injecté se trouve être substantiellement améliorée ainsi que la persistance de l'effet du traitement dans le temps sans que la viscosité de la solution de polymère injectée soit substantiellement modifiée. De manière plus précise, l'invention concerne un procédé pour la réduction sélective de la perméabilité à l'eau dans une formation souterraine productrice d'huile et/ou de gaz, selon lequel on injecte par un puits injecteur ou un puits producteur une composition aqueuse contenant une solution d'au moins un polysaccharide non ionique dans la formation entourant le puits injecteur d'eau ou le puits producteur d'hydrocarbures à une concentration pondérale de 180 à 5.000 parties par million de parties (ppm) de la solution à un débit et/ou une pression adéquate, caractérisé en ce que ladite composition comprend au moins un composé aldéhydique à une concentration pondérale de 200 à 20.000 parties de composé pur par million de parties de la solution, le composé aldéhydique étant à une concentration supérieure à celle du polysaccharide et en ce que l'on remet le puits en production s'il s'agit du puits producteur ou en ce que l'on injecte de l'eau dans le puits injecteur s'il s'agit du puits injecteur d'eau.

Par réduction de perméabilité ($R_k$) à un fluide donné, on entend le rapport de la perméabilité initiale ($k_i$) à la perméabilité finale ($k_f$) mesurée dans les mêmes conditions de débit, donc de gradient de cisaillement et de température.

De préférence, l'injection du mélange polysaccharide non ionique-composé aldéhydique dans le puits injecteur ou le puits producteur est effectuée sous un débit et/ou une pression suffisants pour permettre une introduction aisée dans la formation souterraine mais à une pression inférieure à la pression limite de couche ou pression de fracturation.

Par débit et/ou pression suffisants, on entend un débit et/ou une pression correspondant à un gradient de cisaillement d'au moins 50 s⁻¹. La viscosité du mélange polysaccharide-composé aldéhydique à ce gradient est de préférence inférieure à 10 mPa.s, par exemple de 1 à 9 mPa.s (1 mPa.s = 1 cP).

Typiquement une diminution de viscosité d'au moins 50% par rapport à la viscosité mesurée à un gradient de cisaillement de 1 s⁻¹ est préférée. Le gradient de cisaillement est défini comme $\gamma = \dfrac{4v}{r}$ où $v = \dfrac{q}{S\varphi}$

v :  vitesse de déplacement linéaire en centimètre/sec à l'entrée de la formation
q :  débit en cm³/s
S =  surface d'entrée de la formation
r =  $(8\,k/\varphi)^{1/2}$ = rayon de pore moyen exprimé en centimètre
k =  perméabilité de la formation en cm² (1 cm² = $10^8$ darcys)
$\varphi$ =  porosité.
Remarque: les unités sont en CGS.

De préférence, la composition est introduite dans la formation en milieu légèrement basique, par exemple à un pH compris entre 7,1 et 10 et plus particulièrement à un pH compris entre 7,1 et 8,5.

La mise en oeuvre du procédé selon l'invention est réalisée de la façon suivante:

Dans une opération dite de récupération secondaire on injecte de l'eau dans un puits d'injection et on récupère de l'huile dans un puits de production. Si l'eau injectée dans le puits d'injection arrive prématurément dans le puits de production du fait de l'existence de chenaux ou drains de forte perméabilité, on arrête l'injection d'eau dans le puits d'injection et on procède à l'injection de la composition selon l'invention dans ledit puits d'injection et on modifie la perméabilité à l'eau des chenaux ou drains de la formation souterraine ce qui se traduit par une régularisation du front d'injection d'eau. On réintroduit ensuite de l'eau dans la formation par le puits d'injection dans des conditions de débit généralement identiques à celles de l'injection d'eau initiale pour faire progresser de manière homogène le front de balayage et on récupère l'huile produite.

La composition selon l'invention peut être utilisée pour réduire sélectivement la perméabilité à l'eau dans un puits de production sans affecter la perméabilité aux hydrocarbures. En effet, après avoir constaté que l'on produisait plus d'eau que d'huile, essentiellement par les zones de plus forte perméabilité, on arrête le pompage dans le puits de production et on injecte la composition selon l'invention dans ledit puits. Après injection d'un volume correspondant à une extension radiale de la composition de 1 à 30 mètres à partir de ce puits, suivie éventuellement d'un temps de fermeture du puits de quelques jours pour faciliter l'adsorption du polymère, on remet le puits en production et tout en produisant moins d'eau par la zone de forte perméabilité, on produit davantage d'huile ou de gaz par la zone de faible perméabilité. La remise du puits en production s'effectue en général progressivement et autant que possible à un débit et/ou à une pression égal ou inférieur à celui qui avait été utilisé pour l'injection de la composition aqueuse.

3

Parmi les polysaccharides satisfaisant aux critères de l'invention on préférera les polysaccharides non ioniques comme les glucanes et en particulier le scléroglucane et le schizophyllane, les gommes de galactomannane comme par exemple la gomme guar et en particulier ses dérivés de substitution comme par exemple l'hydroxylpropylguar et le carboxyméthylguar.

Des avantages non négligeables de l'utilisation de ces polysaccharides conformément au présent procédé par rapport aux polyacrylamides et leurs copolymères résident dans leur moindre sensibilité à la dégradation mécanique et au cisaillement tels que rencontrés par les solutions aqueuses de ces polymères essentiellement aux abords du puits et à leur entrée dans la formation, à leur compatibilité et leur pouvoir viscosifiant plus élevés en présence d'eaux salées et au fait que sous l'action de la température, ils ne subissent pas une réaction d'hydrolyse qui affecte la stabilité des polyacrylamides dès que la température dépasse 60-70°C.

Un autre avantage par rapport au brevet US 4,718,491 de la demanderesse réside dans une bien meilleure stabilité de la composition, en particulier dans le domaine de température supérieur à 95°C, ce qui se traduit par une économie en produits injectés dans la formation pétrolifère et par le maintien pendant des durées plus longues des propriétés intrinsèques en particulier de viscosité du polysaccharide non ionique.

Parmi les polysaccharides non ioniques de l'invention, le scléroglucane s'avère être le plus actif. La concentration en polymère en solution aqueuse est liée d'une part à la viscosité qu'il développe et d'autre part à son effet sur la perméabilité à l'eau. Les concentrations utiles se situent le plus souvent entre 180 et 5.000 ppm en poids de polymère par rapport à la solution et de préférence entre 480 et 3.000 ppm, plus particulièrement entre 700 et 2.500 ppm.

Sous le terme composé aldéhydique que l'on mélange à la solution aqueuse de polysaccharide non ionique on entend un monoaldéhyde, un dialdéhyde, un polyaldéhyde et n'importe quelle combinaison des précédents qu'ils soient substitués, comme le chloral par exemple, ou non. Ces aldéhydes peuvent être aromatiques, saturés ou insaturés. Ils sont de préférence saturés et ils sont en général solubles dans la solution aqueuse.

Parmi les composés aldéhydiques de l'invention, le formaldéhyde et les dialdéhydes, de formule générale $OHC(R)_n CHO$ avec $n = 0$ à 6, de préférence 0 à 3 et R étant un radical hydrocarboné divalent de 1 à 4 atomes de carbone, tels que le glyoxal ou le glutaraldéhyde ont la préférence pour des raisons économiques.

La concentration en composé aldéhydique à incorporer aux solutions de polysaccharide non ionique conformément à l'invention est comprise entre 200 ppm et 20.000 ppm de composé aldéhydique pur dans la solution, avantageusement 500 et 15.000 ppm, de façon préférée 1.000 et 12.000 ppm et plus particulièrement entre 3.000 et 10.000 ppm. Cette concentration en composé aldéhydique est de plus fonction de la concentration en polysaccharide non ionique dans la solution aqueuse et de la température de la formation souterraine correspondant à l'application envisagée. Aux plus fortes températures de la formation souterraine correspondra une concentration plus élevée d'aldéhyde. Par exemple à 120°C, on utilisera de préférence une concentration d'au moins 1.000 ppm alors qu'à 70°C, une concentration de 200 ppm peut généralement suffire.

On obtient les meilleurs résultats lorsque la concentration en composé aldéhydique est supérieure à la concentration en polymère.

Le domaine de température visé pour la mise en oeuvre du mélange d'un polysaccharide non ionique et d'un composé aldéhydique est compris entre l'ambiante et 130°C. Comme déjà souligné précédemment un intérêt d'application particulier concerne les températures de 70 à 130°C et plus particulièrement de 100 à 130°C dans des eaux très salées. A ces températures l'addition d'un composé aldéhydique est sans rapport avec l'action bactéricide qui caractérise certains d'entre eux et en particulier le formaldéhyde. Il est en effet reconnu que les polysaccharides subissent en général l'action néfaste des bactéries présentes dans leurs solutions ou provenant du gisement, mais que cette action néfaste diminue lorsque la température augmente et est pratiquement négligeable dès que la température dépasse 70°C.

Il est à noter que contrairement à d'autres formulations utilisées pour réduire la perméabilité à l'eau des formations souterraines et basées sur la formation d'un gel entre un polymère hydrosoluble et un composé aldéhydique qui n'est pas sélectif, tels que les systèmes à base de polyacrylamides cationiques ou non ioniques décrits respectivement dans les brevets des Etats-Unis d'Amérique No 4,782,900 et 4,155,405 déjà cités ou encore ceux à base d'alcool polyvinylique et d'un composé aldéhydique décrits dans les brevets des Etats Unis d'Amérique n° 4,498,540 et 4,664,194, il n'a pas été possible de mettre en évidence une réaction de gélification entre les polysaccharides non ioniques de l'invention et les dits composés aldéhydiques. Plus particulièrement il a été montré que l'addition d'un composé aldéhydique à une solution de polysaccharide non ionique ne modifiait pas la viscosité des-dits polymères dans la limite des concentrations utilisées dans l'invention et cela de manière indépendante des salinités de l'eau et des températures investiguées.

Il est à noter de plus que, bien que les mécanismes d'action ne soient pas encore complètement élucidés, une condition particulièrement avantageuse pour qu'un polysaccharide non ionique satisfasse aux critères de l'invention est qu'il conserve au moins de manière momentanée sa viscosité dans la gamme des salinités et des températures investiguées. C'est par exemple le cas de polysaccharides non ioniques tels que le scléroglucane et le schizophyllane qui possèdent une structure en triple hélice stable théoriquement jusque 130°C et tel que décrit dans la communication de B. Rivenq, A. Donche et C. Noïk à la Société des Ingénieurs Pétroliers sous la référence SPE 19.635 d'octobre 1989. Cette stabilité dans le temps est de manière inattendue exaltée par le composé aldéhydique.

L'invention concerne enfin une composition notamment pour la réduction sélective de la perméabilité à l'eau dans les formations souterraines en particulier chauds et contenant de l'eau salée. Cette composition contient généralement:
- de 0,018% à 0,5% en poids d'au moins un polysaccharide non ionique,
- de 0,02% à 2% en poids d'au moins un composé aldéhydique hydrosoluble, et
- de 97,5% à 99,962% en poids d'eau.

Elle contient avantageusement:
- de 0,048% à 0,3% et de préférence de 0,07 à 0,25% d'au moins un polysaccharide non ionique,
- de 0,05% à 1,5% et de préférence de 0,3 à 1% d'au moins un composé aldéhydique hydrosoluble,
- de 98,2% à 99,902% d'eau et de préférence de 98,75% à 99,63% d'eau.

Les exemples qui suivent sont destinés à illustrer les divers avantages liés à l'utilisation des formulations conformément à l'invention. Ils comportent des tests de stabilité en température et en eau salée des solutions aqueuses de polysaccharide non ionique ainsi que des tests de circulation en milieu poreux dans des conditions les plus proches possibles de celles existant dans la formation pétrolifère.

## Tests en tubes

### Exemples 1 à 8 :

Ils ont été réalisés sur des solutions brutes de polysaccharide poudre en présence ou en absence de composés aldéhydiques à des températures comprises entre 95 et 120°C, soit dans une eau de mer reconstituée au laboratoire à partir de 30 g/l de NaCl et de 3 g/l de $CaCl_2$, $2H_2O$, soit dans une eau de gisement de salinité totale de 124,5 g/l reconstituée au laboratoire à partir de 116,6 g/l de NaCl, 6,4 g/l de $CaCl_2$, $2H_2O$, 1,1 g/l de $MgCl_2$,$6H_2O$ et 0,4 g/l de KCl.

En vue de limiter l'hydrolyse acide des fonctions glycosidiques liant les différentes molécules de carbohydrates entre elles, un support minéral insoluble dans l'eau, le carbonate de calcium, servant de tampon pH entre environ 7,5 et 8,5 et simulant de plus le contact avec la roche réservoir, a été incorporé à la plupart des solutions soumises au test de stabilité thermique. Cette manière d'agir ainsi que les conditions de préparation des différents tubes contenant les compositions selon l'invention sont directement inspirées de la communication de R.S. Seright et B.J. Henrici à la Société des Ingénieurs Pétroliers sous la référence SPE 14.946 d'avril 1986.

Les exemples 1 à 8 se rapportent chacun à des séries de tubes scellés contenant des solutions à 1 g/l de scléroglucane commercial sous forme de poudre, ACTIGUM PVE de la Société SANOFI BIO INDUSTRIES, FRANCE, en présence de concentrations variables en composé aldéhydique et placés dans des étuves à la température indiquée sur le tableau 1. Un tube de chaque série est ouvert respectivement au bout de 3, 7, 15, 30, 60 et 100 jours après sa préparation et sa viscosité mesurée à un gradient de référence arbitrairement choisi à 7,3 $s^{-1}$ à l'aide d'un viscosimètre LS de la société CONTRAVES et comparée à la viscosité au temps t = 0 j.

Le tableau 1 rassemble les résultats des divers tests en terme de nombre de jours nécessaires pour que la viscosité de chaque série de tubes diminue de moitié par rapport à la viscosité initiale.

## TABLEAU 1

Stabilité dans le temps de solutions aqueuses contenant 1000 ppm d'ACTIGUM PVE (tubes scellés)

| Exemple N° | Composé aldéhydique | | T = 95°C | T = 100°C | T = 120°C |
|---|---|---|---|---|---|
| | Nature | concentration (g/l) | Eau de gisement | Eau du mer | Eau de mer |
| 1 | - | - | < 7J | <7J | <7J |
| 2 | formaldéhyde | 2 | <30j | =15 j | <15 j |
| 3 | formaldéhyde | 10 | > 100j | < 100j | < 100 j |
| 4 | formaldéhyde | 30 | > 100j | > 100 j | > 100 j |
| 5 | Glyxal | 10 | | > 100 j | < 100 j |
| 6 | Glyoxal | 30 | | > 100j | > 100 j |
| 7 | glutaraldéhyde | 10 | | > 60 j | < 15 j |
| 8 | glutaraldéhyde | 30 | | > 100 j | < 100 j |

On constate que indépendamment de la température, les solutions ne contenant pas de composé aldéhydique perdent très rapidement leur viscosité. Par contre, en présence de composé aldéhydique la stabilité en température augmente dans le temps en fonction de la concentration en composé aldéhydique.

Exemple 9 à 11 :

Stabilité dans le temps de solutions aqueuses contenant 1000 ppm d'hydroxypropylgar.
Les essais précédents ont été repris avec des solutions dans l'eau de mer contenant 1000 ppm en poudre d'hydroxypropylguar, Galactasol 476 de la Société Aqualon (France). Le pH de toutes les solutions a été maintenu entre 7,5 et 8,5 par addition de $CaCO_3$ sous forme de poudre.

## TABLEAU 2

| Exemple | Composé aldéhydique | | T = 100°C | T = 120°C |
|---|---|---|---|---|
| No | Nature | concentration g/l | | |
| 9 | - | | < 3 j | < 1 j |
| 10 | formaldéhyde | 10 | < 30 j | < 7 j |
| 11 | glyoxal | 10 | < 30 j | < 7 j |

On constate d'après le tableau 2 que l'addition d'un composé aldéhydique permet également d'augmenter la durée de vie des solutions d'hydroxypropylguar mais que l'effet de stabilisation de la viscosité persiste moins longtemps que pour les solutions de scléroglucane.

**Test de réduction de perméabilité à l'eau en milieu poreux**

**Exemples 12 et 13 :**

Deux carottes de grès de Berea ont été placées chacune dans une cellule Hassler, elles-mêmes mises dans une étuve à 100°C. En injectant de l'eau de mer reconstituée (à partir de 30 g/l de NaCl et 3 g/l de $CaCl_2,2H_2O$) à pH environ 7,5 et en mesurant les pertes de charge aux bornes de chaque carotte, on peut calculer la perméabilité de celles-ci en appliquant la loi de Darcy:

$$k = \frac{l\,\mu\,q}{S.\Delta P}.\,10^3$$

où
k    est la perméabilité de la carotte exprimée en millidarcies (mD)
l    est la longueur de la carotte exprimée en cm
$\mu$    est la viscosité de l'eau en mPa.s (1 mPa.s = 1 cP)
q    est le débit d'injection d'eau en $cm^3/s$
$\Delta P$    est la perte de charge aux bornes de la carotte en atmosphère
S    est la surface de la face d'entrée de la carotte en $cm^2$.

Les perméabilités à l'eau des deux carottes de grès de Berea sont respectivement 143 et 149 mD.

Dans chacune des carottes on procède à l'injection à un débit constant de 100 $cm^3/h$ ($\gamma$ = 198 $s^{-1}$) d'une solution à 1 g/l (1000 ppm) de scléroglucane sous forme poudre, ACTIGUM PVE de la société SANOFI BIO INDUSTRIES, FRANCE, dans l'eau de mer reconstituée à partir de 30 g/l de NaCl et 3 g/l de $CaCl_2,2H_2O$ ($\mu$ = 8,5 mPa.s à $\gamma$ = 198 $s^{-1}$, $\mu$ = 350 mPa.s à $\gamma$ = 1 $s^{-1}$) avec la différence toutefois qu'à la première solution on n'ajoute aucun additif stabilisant alors qu'à la seconde on incorpore 10 g/l de formaldéhyde pur (30 g/l de solution commerciale).
Le pH des deux solutions est égal à environ 7,5.

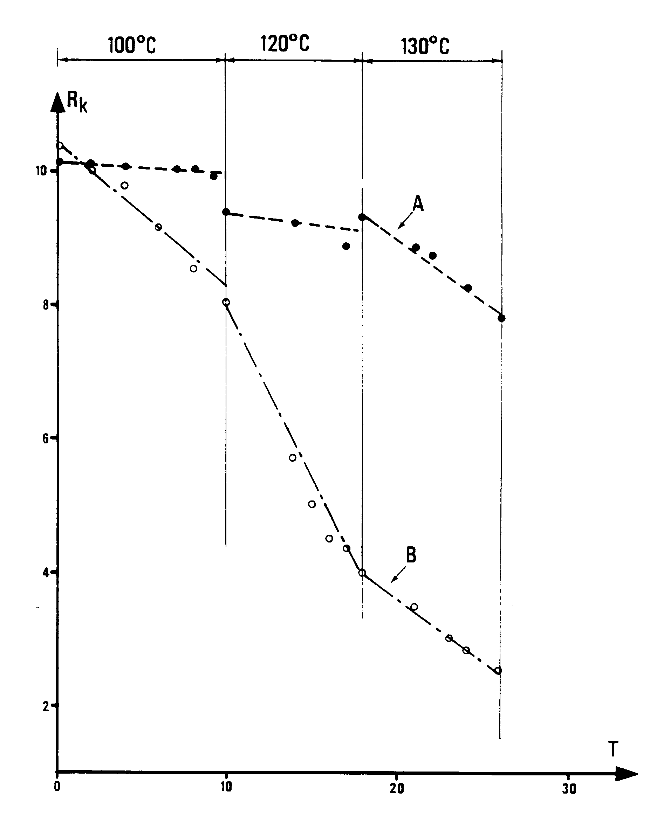

Après injection d'environ 15 volumes de pore de chacune des solutions, on laisse le milieu poreux au repos pendant 48 heures avant de procéder à une nouvelle mesure de la perméabilité à l'eau. La figure 1 montre l'évolution des perméabilités initiales en terme de réductions de perméabilité directement proportionnelles aux pertes de charges mesurées. Pour un débit d'injection d'eau de 100 $cm^3/h$ ces valeurs de réduction de perméabilité sont respectivement de 10,35 et 10,1.

En circuit fermé on procède à la circulation au même débit de 100 $cm^3/h$ d'eau de mer reconstituée. Quotidiennement on mesure les pertes de charge aux bornes du milieu poreux et on calcule les valeurs de réduction de perméabilité. Les résultats sont reproduits sur la figure 1, où est portée l'évolution de la réduction de perméabilité à l'eau au cours du temps exprimé en jours (courbe A avec additif, B sans additif).

Après 10 jours de circulation d'eau à 100°C on monte progressivement la température de l'étuve à 120°C pendant 8 jours, puis à 130°C pendant également 8 jours et l'on procède également à la mesure quotidienne des pertes de charges aux bornes de chaque carotte.

La figure 1 montre que en présence de 10 g/l de formaldéhyde, conformément à l'invention, les valeurs de réduction de perméabilité sont nettement plus stables qu'en l'absence d'additif.

**Exemple 14 :**

Les tests précédents sont repris en incorporant cette fois 3,3 g/l de glyoxal pur (10 g/l de solution commerciale) à la solution dans l'eau de mer (30 g/l de NaCl et 3 g/l de $CaCl_2,2H_2O$) de 1 g/l (1000 ppm) de scléroglucane poudre, ACTIGUM PVE de la société SANOFI BIO INDUSTRIES, FRANCE, qui est ensuite injectée dans une carotte de grès de Berea de perméabilité initiale de 195 mD à un débit de 100 cm³/h ($\mu = 9,2$ mPa.s à un gradient de 165 s⁻¹ alors que $\mu = 350$ mPa.s à un gradient de 1 s⁻¹).
Le pH de la solution est égal à environ 7,5..

A la température de 120°C et pour un débit d'eau de gisement reconstituée (39,932 g/l de salinité totale) de 100 cm³/h, la valeur initiale de réduction de perméabilité de 4,8 est parfaitement stable pendant 10 jours. Lorsque la température de l'essai est portée à 130°C, cette valeur décroît progressivement pour atteindre une valeur finale de 3,2 à cette température après 8 jours.

**Exemple 15 :**

On a répété l'exemple 14 mais au lieu d'injecter une composition comprenant du scléroglucane et du glyoxal on a injecté dans un grès de Berea de perméabilité initiale à l'eau $k_i$ de 85 mD une composition comprenant 1 g/l (1000 ppm) de scléroglucane poudre et 10 g/l de glutaraldéhyde pur (30 g/l de solution commerciale) dispersée dans l'eau de mer reconstituée. Le pH de la solution est d'environ 7,5. Pendant 8 jours à la température de 120°C on a observé une stabilité parfaite de la réduction de perméabilité à l'eau de gisement de 39,932 g/l de salinité totale.

**Exemple 16 comparatif :**

Les conditions des exemples 14 et 15 ont été reprises mais au lieu d'injecter une composition comprenant du scléroglucane et du glyoxal ou du glutaraldéhyde on a injecté dans un grès de Berea de perméabilité initiale à l'eau $k_i$ de 98 mD une composition comprenant 2 g/l (2000 ppm) d'un polysaccharide anionique, gomme xanthane sous forme poudre, RHODOPOL 23 R de la société RHONE-POULENC INDUSTRIES, FRANCE, et 10 g/l de formaldéhyde pur (30 g/l de solution commerciale), dispersée dans l'eau de mer reconstituée. Après 1 jour à la température de 120°C, la réduction de perméabilité initiale $k_i$ à l'eau de gisement de 39,932 g/l de salinité totale qui était de 1,85 est tombée à 1,05, ce qui représente une absence quasi-totale de stabilité du polymère à cette température.

**Tests de réduction de la perméabilité à l'eau dans un puits producteur d'huile**

**Exemples 17 et 18 :**

En vue de préparer une injection de polymère pour réduire les venues d'eau d'un puits producteur d'huile avec un fort pourcentage de production d'eau, des tests ont été réalisés au laboratoire sur deux carottes de gisement de perméabilité initiale à l'eau de gisement, de 124,5 g/l de salinité totale, respectivement de 47,5 et 53,8 mD en présence d'huile résiduelle.

Dans chacune de ces carottes on a injecté, à un pH égal à environ 7,5, à la température de 95°C et au débit de 20 cm³/h ($\gamma = 215$ s⁻¹) une solution de 1 g/l (1000 ppm) de scléroglucane poudre dans l'eau de gisement ($\mu = 8,3$ mPa.s à $\gamma = 215$ s⁻¹, $\mu = 500$ mPa.s à $\gamma = 1$ s⁻¹) contenant 2 g/l de formaldéhyde pur (6 g/l de solution commerciale) pour la première carotte ($k_i = 47,5$ mD) et aucun additif pour la deuxième carotte ($k_i = 53,8$ mD).

Lorsque l'injection de polymère dans le sens AB des carottes est achevée (environ 10 volumes de pore de solution injectée), on procède à l'injection d'eau de gisement dans le sens BA au même débit que l'injection de polymère (20 cm³/h). Lorsque tout le polymère libre, c'est-à-dire non adsorbé par le milieu poreux, est déplacé, ce qui se détecte aisément par mesure de la viscosité de l'effluent, on obtient des valeurs stabilisées des pertes de charge à l'eau aux bornes des deux carottes, ce qui permet de calculer une perméabilité finale $k_f$ à l'eau de gisement et donc des valeurs de réduction de perméabilité $R_k$ qui sont respectivement de 16 et de 14,5 au débit de 20 cm³/h et à 95°C.

A intervalles réguliers et pendant une durée de 3 mois on procède à des mesures de la réduction de perméabilité pour chacune des carottes maintenues dans une étuve à 95°C. Au bout de 3 mois on constate que les valeurs de réduction de perméabilité sont inchangées pour la première carotte ayant été soumise à l'injection de la composition selon l'invention alors que les valeurs correspondantes sur la seconde carotte ont chuté de plus de 90%. A une température de 95°C, des concentrations plus faibles de composé aldéhydique suffisent par conséquent à assurer une parfaite stabilité du scléroglucane et le maintien de ses propriétés de réduction de la perméabilité à l'eau.

**Tests de réduction sélective de la perméabilité à l'eau**

**Exemples 19 et 20 :**

Ces exemples sont destinés à démontrer la supériorité des formulations selon l'invention contenant un polysaccharide et un composé aldéhydique sur celles qui n'en contiennent pas en ce qui concerne la réduction sélective de la perméabilité à l'eau sans affecter celle de l'huile.

**Exemple 19 :**

Une carotte de grès de Berea est insérée dans une cellule Temco équipée de prises de pressions intermédiaires, l'ensemble étant placé dans une étuve à 120°C. La longueur AD de la carotte est de 142 mm et les prises de pression intermédiaires sont situées respectivement en B à 25 mm de l'entrée de la carotte et en C à 15 mm de la sortie de la carotte.

On sature tout d'abord la carotte en eau de mer reconstituée à partir de 30 g/l de NaCl et 3 g/l de $CaCl_2,2H_2O$ et on mesure une perméabilité initiale entre B et C de 1,55 Darcys.

On procède ensuite à l'injection d'huile neutre de viscosité $\mu$ = 2,8 mPa.s à la température de 120°C et on mesure la perméabilité à l'huile entre B et C qui est égale à 2 Darcys.

On réinjecte à nouveau de l'eau et on retrouve pratiquement la perméabilité initiale à l'eau qui est de 0,58 Darcys.

On procède ensuite à l'injection au débit de 400 cm³/h ($\gamma$ = 580 s$^{-1}$) d'une composition dans l'eau de mer comprenant 1 g/l (1000 ppm) de scléroglucane sous forme poudre, ACTIGUM PVE de SANOFI BIO INDUSTRIES, FRANCE ($\mu$ = 340 mPa.s à $\gamma$ = 1 s$^{-1}$, $\mu$ = 3,1 mPa.s à $\gamma$ = 580 s$^{-1}$) et également 10g/l de formaldéhyde pur (30 g/l de solution commerciale) à pH égal à environ 7,5.

En déplaçant le polymère non adsorbé par de l'eau de mer au débit de 100 cm³/h, on détermine une nouvelle valeur de la perméabilité à l'eau de 281 mD. La réduction de perméabilité à l'eau est donc de 7,2.

En déplaçant l'eau par l'huile on constate que la perméabilité à l'huile est toujours de 2 Darcys, la réduction de perméabilité à l'huile est donc de 1.

Après des périodes d'immobilisation de la carotte à la température de 120°C de respectivement 6 jours, 90 jours et 150 jours on procède aux mêmes mesures que ci-dessus. Les résultats sont reproduits sur le tableau 3.

## TABLEAU 3

### Stabilité dans le temps et sélectivité d'une composition scléroglucane-formaldéhyde en milieu poreux à 120°C

| Référence | Temps de séjour à 120°C | $R_{k \, (huile)}$ | $R_{k \, (eau)}$ |
|---|---|---|---|
| sans polymère | 0 j | 1,00 | 1,00 |
| Scléroglucane | 0 j | 1,00 | 7,2 |
| 1g/l | 6 j | 0,98 | 7,2 |
| Formaldéhyde pur | 90 j | 0,96 | 7,1 |
| 10 g/l | 150 j | 0,95 | 6,9 |

On constate que la formulation de l'invention, mise en place en milieu poreux à température élevée, permet de réduire efficacement la perméabilité à l'eau sans affecter celle de l'huile.

**Exemple 20** : Comparatif.

Les conditions de l'exemple 19 sont reconduites en utilisant une autre carotte de grès de Berea. On procède à la mise en place au débit q = 100 cm³/h ($\gamma$ = 150 s⁻¹) d'une solution à 1 g/l (1000 ppm) de scléroglucane poudre, ACTIGUM PVE de la société SANOFI BIO INDUSTRIES, FRANCE dans l'eau de mer ($\mu$ = 340 mPa.s à $\gamma$ = 1 sec⁻¹, $\mu$ = 9,8 mPa.s à $\gamma$ = 150 s⁻¹) en l'absence de tout composé aldéhydique.

La perméabilité initiale $k_i$ à l'eau de mer en présence d'huile résiduelle sur la section BC de 370 mD est réduite d'un facteur 5,6 par suite de la mise en place du polymère ($k_f$ = 66 mD).

La perméabilité initiale à l'huile en présence d'eau résiduelle sur la même section BC ($k_i$ = 1500 mD) n'est pas affectée par la présence du polymère ($R_k$ = 1).

La carotte est mise à vieillir à 120°C pendant 105 jours après quoi on reprend les écoulements alternés eau-huile. On constate que la perméabilité à l'eau de mer remonte à 296 mD ($R_k$ = 1,25), ce qui implique une absence de stabilité du polymère en place. De plus la perméabilité à l'huile est également affectée ($k_{huile}$ = 1300 mD, $R_k$ = 1,15).

La stabilisation du polymère n'est pas donc assurée en l'absence de composé aldéhydique.

## Revendications

1. Procédé pour la réduction sélective de la perméabilité à l'eau dans une formation souterraine productrice d'huile et/ou de gaz de température comprise entre 70 et 130°C, selon lequel on injecte par un puits injecteur ou un puits producteur une composition aqueuse contenant une solution d'au moins un polysaccharide non ionique dans la formation entourant le puits injecteur d'eau ou le puits producteur d'hydrocarbures à une concentration pondérale de 180 à 5000 parties par million de parties (ppm) de la solution dans des conditions de pH, de débit et/ou de pression adéquates, caractérisé en ce que ladite composition comprend au moins un composé aldéhydique à une concentration pondérale de 200 à 20.000 parties de composé pur par million de parties de la solution, le composé aldéhydique étant à une concentration supérieure à celle du polysaccharide et en ce que l'on remet le puits en production s'il s'agit du puits producteur ou en ce que l'on injecte de l'eau dans le puits injecteur s'il s'agit du puits injecteur d'eau.

2. Procédé selon la revendication 1 dans lequel le débit et/ou la pression est tel que le gradient de cisaillement est d'au moins 50 s⁻¹ et la viscosité de la composition est inférieure à 10 mPa./s.

3. Procédé selon la revendication 1 ou 2 dans lequel le polysaccharide est choisi dans le groupe formé par les glucanes, les gommes de galactomannane et leurs mélanges.

4. Procédé selon l'une des revendications 1 à 3 dans lequel le polysaccharide est le scléroglucane.

5. Procédé selon l'une des revendications 1 à 4 dans lequel le composé aldéhydique est un monoaldéhyde, un dialdéhyde, un polyaldéhyde ou une combinaison de ceux-ci, substitués ou non.

6. Procédé selon l'une des revendications 1 à 5 dans lequel le composé aldéhydique est choisi dans le groupe formé par le formaldéhyde, le glyoxal et le glutaraldéhyde.

7. Procédé selon l'une des revendications 1 à 6 dans lequel le composé aldéhydique est à une concentration de 500 à 15000 ppm en poids, pur, dans la solution et de préférence 1000 à 12.000 ppm et plus particulièrement 3000 à 10.000 ppm.

8. Procédé selon l'une des revendications 1 à 7 dans lequel le polysaccharide est à une concentration de 480 à 3000 ppm dans la solution et de façon préférée 700 à 2500 ppm.

9. Procédé selon l'une des revendications 1 à 8 dans lequel le débit et/ou la pression sont suffisants pour réduire la viscosité de la composition injectée d'au moins 50% par rapport à sa valeur au gradient de cisaillement de 1 s⁻¹.

10. Procédé selon l'une des revendications 1 à 9, caractérisé en ce qu'il est appliqué à un puits de production d'huile ou de gaz.

11. Procédé selon l'une des revendications 1 à 9, caractérisé en ce qu'il est appliqué à un puits d'injection d'eau dans une formation contenant de l'huile ou du gaz.

12. Procédé selon l'une des revendications 1 à 11, caractérisé en ce qu'on injecte la composition en milieu légèrement basique.

13. Procédé selon l'une des revendications 1 à 12, caractérisé en ce qu'il est appliqué au cas où une eau d'injection ou une eau de production a une salinité d'au moins 30 g/l, exprimée en NaCl.

14. Composition contenant:
    - de 0,018% à 0,5% en poids d'au moins un polysaccharide non ionique selon la revendication 1, 3 ou 4;
    - de 0,02 à 2% en poids d'au moins un composé aldéhydique hydrosoluble selon la revendication 1, 5 ou 6; et
    - de 97,5% à 99,962% en poids d'eau.

15. Composition selon la revendication 14 contenant:
    - de 0,048% à 0,3% et de préférence de 0,07 à 0,25% d'au moins un polysaccharide non ionique,
    - de 0,05% à 1,5% et de préférence de 0,3 à 1% d'au moins un composé aldéhydique hydrosoluble; et
    - de 98,2% à 99,902% d'eau et de préférence de 98,75% à 99,63% d'eau.

**Patentansprüche**

1. Verfahren zur selektiven Verringerung der Permeabilität für Wasser in einer unterirdischen Produktionsformation für Öl und/oder Gas mit einer Temperatur zwischen 70 und 130°C, bei dem man eine wäßrige Zusammensetzung, enthaltend eine Lösung mindestens eines nicht-ionischen Polysaccharids, durch ein Injektionsbohrloch oder ein Produktionsbohrloch in die das Wasserinjektionsbohrloch oder das Kohlenwasserstoffproduktionsbohrloch umgebende Formation in einer Gewichtskonzentration von 180 bis 5000 Teilen pro Million Teilen (ppm) der Lösung unter geeigneten pH-Wert-, Durchlußmengen- und/oder Druckbedingungen einpreßt, dadurch gekennzeichnet, daß die genannte Zusammensetzung mindestens eine Aldehydverbindung in einer Gewichtskonzentration von 200 bis 20 000 Teilen reine Verbindung pro Million Teilen Lösung enthält, wobei die Aldehydverbindung in einer höheren Konzentration vorliegt als das Polysaccharid, und daß man in dem Bohrloch die Produktion wieder aufnimmt, wenn es sich dabei um ein Produktionsbohrloch handelt, oder daß man Wasser in das Injektionsbohrloch einpreßt, wenn es sich dabei um ein Waserinjektionsbohrloch handelt.

2. Verfahren nach Anspruch 1, bei dem die Durchflußmenge und/oder der Druck so sind, daß der Scher-Gradient mindestens 50 s$^{-1}$ beträgt und die Viskosität der Zusammensetzung unterhalb 10 mPa x s liegt.

3. Verfahren nach Anspruch 1 oder 2, bei dem das Polysaccharid ausgewählt wird aus der Gruppe, die besteht aus den Glucanen, den Galactoman-Gummis und ihren Gemischen.

4. Verfahen nach einem der Ansprüche 1 bis 3, bei dem das Polysaccharid das Scleroglucan ist.

5. Verfahren nach einem der Ansprüche 1 bis 4, bei dem die Aldehydverbindung ein Monoaldehyd, ein Dialdehyd, ein Polyaldehyd oder eine Kombination derselben ist, die substituiert oder nicht-substituiert sein können.

6. Verfahren nach einem der Ansprüche 1 bis 5, bei dem die Aldehydverbindung ausgewählt wird aus der Gruppe, die besteht aus Formaldehyd, Glyoxal und Glutaraldehyd.

7. Verfahren nach einem der Ansprüche 1 bis 6, bei dem die Aldehydverbindung in einer Konzentration von 500 bis 15 000 Gew.-ppm, vorzugsweise 1000 bis 12 000 Gew.-ppm und insbesondere 3000 bis 10 000 Gew.-ppm reine Verbindung in der Lösung vorliegt.

8. Verfahren nach einem der Ansprüche 1 bis 7, bei dem das Polysaccharid in einer Konzentration von 480 bis 3000 ppm, vorzugsweise von 700 bis 2500 ppm, in der Lösung vorliegt.

9. Verfahren nach einem der Ansprüche 1 bis 8, in dem die Durchflußmenge und/oder der Druck ausreichen, um die Viskosität der eingepreßten Zusammensetzung um mindestens 50 % gegenüber ihrem Schergradienten von 1 s$^{-1}$ herabzusetzen.

10. Verfahren nach einem der Ansprüche 1 bis 9, dadurch gekennzeichnet, daß es auf ein Öl- oder Gas-Produktionsbohrloch angewendet wird.

11. Verfahren nach einem der Ansprüche 1 bis 9, dadurch gekennzeichnet, daß es auf ein Wasserinjektionsbohrloch in einer Öl oder Gas enthaltenden Formation angewendet wird.

12. Verfahren nach einem der Ansprüche 1 bis 11, dadurch gekennzeichnet, daß man die Zusammensetzung in einem schwach basischen Medium einpreßt.

13. Verfahren nach einem der Ansprüche 1 bis 12, dadurch gekennzeichnet, daß es angewendet wird auf den Fall, in dem ein Injektionswasser oder ein Produktionswasser einen Salzgehalt von mindestens 30 g/l, ausgedrückt als NaCl, hat.

14. Zusammensetzung, die enthält:
    - 0,018 bis 0,5 Gew.-% mindestens eines nicht-ionischen Polysaccharids nach Anspruch 1, 3 oder 4;
    - 0,02 bis 2 Gew.-% mindestens einer wasserlöslichen Aldehydverbindung nach Anspruch 1, 5 oder 6; und
    - 97,5 bis 99,962 Gew.-% Wasser.

15. Zusammensetzung nach Anspruch 14, die enthält:
    - 0,048 bis 0,3 %, vorzugsweise 0,07 bis 0,25 % mindestens eines nicht-ionischen Polysaccharids,
    - 0,05 bis 1,5 %, vorzugsweise 0,3 bis 1 % mindestens einer wasserlöslichen Aldehydverbindung; und
    - 98,2 bis 99,902 %, vorzugsweise 98,75 bis 99,63 % Wasser.

**Claims**

1. A method of selectively reducing permeability to water in an underground formation producing oil and/or gas at a temperature of 70 to 130°C, wherein an aqueous composition containing a solution of at least one non-ionic polysaccharide is injected through an injecting well or a producing well into a formation surrounding the water injecting well or the hydrocarbon producing well, at a concentration (by weight) of 180 to 5000 parts per million (ppm) of solution under appropriate pH conditions and at an appropriate flow rate and/or pressure, characterised in that the composition comprises at least one aldehyde compound at a concentration (by weight) of 200 to 20000 parts of pure compound per million parts of solution, the aldehyde compound being at a higher concentration than the polysaccharide, and that, if the aqueous composition is injected into the producing well, that well is put back into production or if it is injected into the water injecting well, then water is injected into that well.

2. The method of Claim 1, wherein the flow rate and/or pressure is such that the shear rate is at least 50 $s^{-1}$ and the viscosity of the composition is less than 10 mPA/s.

3. The method of Claim 1 or 2, wherein the polysaccharide is selected in the group formed by glucanes, galactomannane gums and mixtures thereof.

4. The method of any of Claims 1 to 3, wherein the polysaccharide is scleroglucane.

5. The method of any of Claims 1 to 4, wherein the aldehyde compound is a monoaldehyde, a dialdehyde, a polyaldehyde or a combination thereof, in substituted or non-substituted form.

6. The method of any of Claims 1 to 5, wherein the aldehyde compound is selected from the group formed by formaldehyde, glyoxal and glutataldehyde.

7. The method of any of Claim 1 to 6, wherein the aldehyde compound is at a concentration of 500 to 15000 ppm by weight, pure, in the solution, preferably from 1000 to 12000 ppm and more particularly from 3000 to 10000 ppm.

8. The method of any of Claims 1 to 7, wherein the polysaccharide is at a concentration of 480 to 3000 ppm in the solution and preferably from 700 to 2500 ppm.

9. The method of any of Claim 1 to 8, wherein the flow rate and/or pressure are sufficient to reduce the viscosity of the injected composition by at least 50% relative to its value at a shear rate of 1 $s^{-1}$.

10. The method of any of Claim 1 to 9, characterised in that it is applied to a well producing oil or gas.

11. The method of any of Claims 1 to 9, characterised in that it is applied to a well for injecting water in a formation containing oil or gas.

12. The method of any of Claims 1 to 11, characterised in that the composition is injected in a slightly basic medium.

13. The method of any of Claim 1 to 12, characterised in that it is applied to a case where the injection water or production water has a salinity of at least 30 g/l, expressed in NaCl.

14. A composition containing:
    - from 0.018% to 0.5% by weight of at least one non-ionic polysaccharide according to Claim 1, 3 or 4:
    - from 0.02 to 2% by weight of at least one water soluble aldehyde compound according to Claim 1, 5 or 6; and
    - from 97.5% to 99.962% by weight of water.

15. The composition of Claim 14 containing:
    - from 0.048% to 0.3% and preferably from 0.07 to 0.25% of at least one non-ionic polysaccharide,
    - from 0.05% to 1.5% and preferably from 0.3 to 1% of at least one water soluble aldehyde compound; and
    - from 98.2% to 99.902% of water and preferably from 98.75% to 99.63% of water.